Europäisches Patentamt

European Patent Office

Office européen des brevets

(11) Numéro de publication : **0 373 014 B1**

# FASCICULE DE BREVET EUROPEEN

(45) Date de publication du fascicule du brevet :
24.07.91 Bulletin 91/30

(51) Int. Cl.⁵ : **B60R 13/04, F16B 21/09**

(21) Numéro de dépôt : **89403092.3**

(22) Date de dépôt : **09.11.89**

(54) **Dispositif de protection d'un panneau de carrosserie et son procédé de montage.**

(30) Priorité : 30.11.88 FR 8815662

(43) Date de publication de la demande :
13.06.90 Bulletin 90/24

(45) Mention de la délivrance du brevet :
24.07.91 Bulletin 91/30

(84) Etats contractants désignés :
DE GB IT

(56) Documents cités :
DE-A- 2 905 699
DE-A- 3 506 127
FR-A- 793 537
FR-A- 1 562 681
US-A- 4 039 215

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Rouillard, Firmin**
**18, Rue de la Croix Taron**
**F-91360 Epinay-sur-Seine (FR)**

(74) Mandataire : **Fabien, Henri et al**
**PEUGEOT SA. Propriété Industrielle 18, rue**
**des Fauvelles**
**F-92250 La Garenne-Colombes (FR)**

## Description

L'invention a pour objet un dispositif de protection destiné, plus particulièrement, à un panneau extérieur de la carrosserie d'un véhicule automobile.

Elle a également pour objet un procédé de montage de ce dispositif de protection sur le panneau à protéger.

Les éléments de protection des dispositifs habituels, qui ont en général également une fonction d'enjoliveur, peuvent être fixés de différentes manières connues :

— Par collage à l'aide d'un adhésif double face. Ce mode de fixation nécessite une gamme opératoire très stricte difficile à bien réaliser sur une ligne d'assemblage. De ce fait, les risques de mauvais alignement et de décollement ultérieur sont importants.

— Par agrafage à l'aide d'agrafes préalablement montées sur le panneau. Le temps de montage des agrafes est alors important et il n'est pas compensé par la simplicité de l'opération finale d'agrafage. En outre, la fixation n'est pas fiable surtout lorsque le protecteur est réalisé en matériau plastique relativement souple tel qu'un polypropylène.

— Par vissage à l'aide de vis non visibles de l'extérieur introduites et serrées du côté intérieur du panneau. Cette méthode assure une bonne qualité de positionnement et de fixation mais elle nécessite soit la présence de deux opérateurs, soit un système de maintien du protecteur pendant le serrage des vis.

L'invention a donc pour but un dispositif de protection dont le montage et la fiabilité ne présentent aucun des inconvénients ci-dessus, tout en bénéficiant de tous les avantages des dispositifs de protection vissés.

Un dispositif de protection conforme à l'invention est donc du type comportant un élément souple de protection, des moyens de positionnement et de fixation portés par cet élément et coopérant avec des ouvertures correspondantes dans le panneau à protéger.

Il se caractérise en ce que :

— l'élément souple ou protecteur comporte des bossages formés en relief sur sa face d'appui sur le panneau ;

— des vis de fixation munies de moyens d'appui sur le panneau coopèrent avec des trous filetés disposés dans l'axe de chacun des bossages ;

— les ouvertures dans le panneau sont constituées par des boutonnières disposées en regard de chaque bossage et présentant des axes de symétrie parallèles entre eux, la largeur de chaque boutonnière évoluant entre une valeur permettant le passage des bossages à travers le panneau mais non celui des moyens d'appui des vis et une valeur suffisante pour permettre le passage de ces moyens d'appui.

De préférence, il est prévu un pion de centrage formé en relief sur la face d'appui de l'élément de protection coopérant avec une ouverture de section correspondante ménagée dans le panneau.

Selon une autre caractéristique de l'invention, les moyens d'appui des vis sur le panneau sont constitués par des entretoises qui sont, de préférence, en forme de cuvette à fond plat.

Le procédé de montage d'un dispositif de protection conforme à l'invention se caractérisé par les étapes suivantes :

— le protecteur souple est préalablement muni de ses moyens de positionnement et de fixation, les vis étant simplement engagées sans serrage ;

— l'opérateur unique présente le protecteur sur le panneau, les moyens de positionnement et de fixation s'introduisant dans la zone large des boutonnières ;

— l'opérateur fait glisser le protecteur vers sa position finale ;

— l'opérateur se déplace de l'autre côté du panneau et bloque les vis sans tenir le protecteur.

D'autres caractéristiques et avantages de l'invention apparaîtront mieux dans la description détaillée qui suit et se réfère aux dessins annexés donnés uniquement à titre d'exemple, et dans lesquels :

— la Figure 1 montre en section longitudinale le dispositif de protection en place sur le panneau avant serrage des vis de fixation ;

— la Figure 2 montre, en projection parallèlement aux axes des bossages, la forme des boutonnières ;

— la Figure 3 est une section perpendiculaire au plan de la Figure 1 du protecteur fixé sur le panneau après serrage des vis de fixation.

Le protecteur 1, en matériau relativement souple, comporte plusieurs bossages 2 disposés en relief sur sa face 3 destinée à prendre appui sur le panneau extérieur 4 d'un élément de carrosserie 5 comportant un panneau intérieur ou doublure 6. Le panneau extérieur 4 est serti et/ou soudé sur le panneau intérieur 6 de manière habituelle. L'élément 5 peut être par exemple une porte ou une aile de véhicule automobile.

Dans l'axe de chaque bossage 2 est ménagé un trou borgne fileté destiné à coopérer avec des vis de fixation 7 munies chacune d'une rondelle d'appui 8 en forme de cuvette à fond plat.

En regard de chaque bossage 2 est disposée une ouverture 9 poinçonnée dans le panneau 4. Les ouvertures 9 ont la forme de boutonnières de largeur évolutive et présentant des axes de symétrie sensiblement parallèles entre eux.

De préférence, les axes des bossages 2, ainsi que les axes de symétrie des boutonnières 9 sont situés dans un même plan.

Par simplification, on a représenté un panneau extérieur plan et de ce fait, les axes des boutonnières sont alignés.

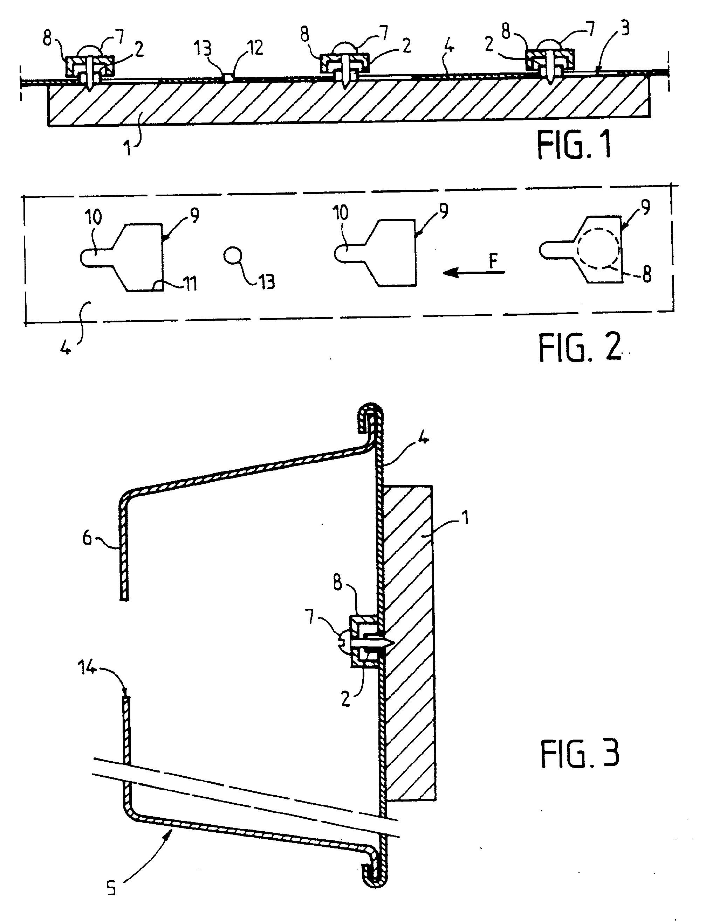

Chaque boutonnière 9 comporte deux zones 10 et 11 à bords droits parallèles de largeurs différentes et raccordées de façon progressive. Dans l'exemple décrit, le raccordement s'effectue par des bords droits formant entre eux un V. La largeur de la zone étroite 10 permet le passage des bossages 2 à travers le panneau extérieur 4 avec un faible jeu mais non celui des rondelles d'appui 8. La largeur de la zone 11 est supérieure au diamètre de la circonférence extérieure des rondelles 8 qui s'inscrit à l'intérieur des boutonnières comme montré en traits mixtes sur la Figure 2.

Le protecteur 1 comporte en outre un pion de centrage 12 destiné à coopérer avec une ouverture 13 de section correspondante ménagée dans le panneau 4. De préférence, l'axe du pion de centrage est dans le même plan que les axes de bossages 2. Dans le cas d'un panneau plan, l'ouverture 13 est donc alignée sur l'axe des boutonnières.

La doublure intérieure 6 comporte, face à chaque boutonnière 9 du panneau extérieur 4, une ouverture 14 permettant le passage d'un outil destiné à serrer les vis 7.

Le montage du protecteur qui vient d'être décrit s'effectue de la manière suivante :

— Les vis 7 et les entretoises 8 sont préalablement montées non serrées sur le protecteur 1 de façon à laisser entre les entretoises 8 et la face d'appui 3 un jeu supérieur à l'épaisseur du panneau 4.

— L'élément de carrosserie 5 étant par exemple placé sur un chariot, l'opérateur présente le protecteur muni de ses moyens de fixation de façon telle que chaque entretoise 8 se trouve en face de la zone large 11 de la boutonnière correspondante 9.

— L'opérateur plaque alors le protecteur contre le panneau de manière à ce que le pion de centrage 12 soit en appui, puis le fait glisser vers sa position finale dans le sens de la flèche F. Les bossages 2 guidés par les bords en V s'engagent alors dans les zones étroites 10 des boutonnières 9, puis le pion 12 se loge dans l'ouverture 13, ce qui immobilise le protecteur.

— L'opérateur se déplace alors de l'autre côté du panneau et bloque les vis 7 sans tenir le protecteur.

**Revendications**

1. Dispositif de protection, en particulier pour un élément (5) de carrosserie, comprenant un élément souple (1) de protection, des moyens de positionnement et de fixation portés par cet élément et des ouvertures (9) ménagées dans le panneau extérieur (4) de l'élément de carrosserie, caractérisé en ce que:

— l'élément souple ou protecteur (1) comporte des bossages (2) formés en relief sur sa face d'appui (3) sur le panneau (4) ;

— des vis de fixation (7) munies de moyens d'appui (8) sur le panneau coopèrent avec des trous filetés disposés dans l'axe de chacun des bossages (2) ;

— les ouvertures dans le panneau (4) sont constituées par des boutonnières (9) disposées en regard de chaque bossage (2) et présentant des axes de symétrie parallèles entre eux, la largeur de chaque boutonnière évoluant entre une valeur permettant le passage des bossages à travers le panneau mais non celui des moyens d'appui (8) des vis et une valeur suffisante pour permettre le passage de ces moyens d'appui.

2. Dispositif selon la revendication 1, caractérisé en ce qu'un pion de centrage (12) formé en relief sur la face d'appui de l'élément de protection (1) coopère avec une ouverture (13) de section correspondante ménagée dans le panneau.

3. Dispositif selon les revendications 1 ou 2, caractérisé en ce que les moyens d'appui des vis sur le panneau sont constitués par des entretoises (8).

4. Dispositif selon la revendication 3, caractérisé en ce que les entretoises (8) sont en forme de cuvette à fond plat.

5. Dispositif selon l'une quelconque des revendications 2 à 4, caractérisé en ce que les axes des bossages (2) ainsi que les axes de symétrie des boutonnières (9) sont situés dans un même plan.

6. Dispositif selon la revendication 5, caractérisé en ce que l'axe du pion de centrage (12) est dans le même plan que les axes des bossages (2).

7. Dispositif selon l'une quelconque des revendications précédentes, caractérisé en ce que le panneau de carrosserie (5) comporte un panneau extérieur (4) muni des ouvertures (9) et un panneau intérieur (6) muni d'ouvertures (14) disposés en face de chaque ouverture (9).

8. Procédé de montage sur un élément de carrosserie (5) d'un dispositif de protection conforme à l'une quelconque des revendications précédentes, caractérisé en ce qu'il comporte les étapes suivantes :

— le protecteur souple (1) est préalablement muni de ses moyens de positionnement et de fixation, les vis (7) étant simplement engagées sans serrage ;

— l'opérateur unique présente le protecteur sur le panneau (4), les moyens de positionnement et de fixation s'introduisant dans la zone large (11) des boutonnières (9) ;

— l'opérateur fait glisser le protecteur vers sa position finale ;

— l'opérateur se déplace de l'autre côté du panneau et bloque les vis (7) sans tenir le protecteur.

## Patentansprüche

1. Schutzvorrichtung, insbesondere für ein Karosserieelement, mit einem flexiblen Schutzelement (1), Positionier- und Befestigungsmitteln, die durch dieses Element gehalten sind, und Öffnungen (9), die in der Außenwand (4) des Karosserieelements vorgesehen sind, dadurch gekennzeichnet,

— daß das flexible Schutzelement (1) Nocken (2) aufweist, die von seiner Auflagefläche (3) an der Wand (4) vorstehend gebildet sind,

— daß die mit Auflagen (8) an der Wand versehenen Befestigungsschrauben (7) mit Gewindebohrungen zusammenwirken, die in der Achse jedes Nockens (2) angeordnet sind,

— daß die Öffnungen in der Wand (4) durch Aussparungen (9) gebildet sind, die jeder Nocke (2) gegenüberliegen und zueinander parallele Symmetrieachsen aufweisen, wobei sich die Breite jeder Aussparung zwischen einem Wert bewegt, der den Durchgang der Nocken durch die Wand ermöglicht aber nicht den Durchgang der Schraubenauflagen (8) und einem Wert, der ausreicht, um den Durchgang dieser Auflagen zu ermöglichen.

2. Vorrichtung nach Anspruch 1, gekennzeichnet durch einen vorstehend auf der Auflagefläche des Schutzelements (1) gebildeten Zentrierstift (12), der mit einer in der Wand vorgesehenen Öffnung (13) mit entsprechendem Querschnitt zusammenwirkt.

3. Vorrichtung nach Anspruch 1 oder 2, dadurch gekennzeichnet, daß die Schraubenauflagen auf der Platte als Distanzhülsen (8) ausgebildet sind.

4. Vorrichtung nach Anspruch 3, dadurch gekennzeichnet, daß die Distanzhülsen (8) napfförmig mit flachem Boden ausgebildet sind.

5. Vorrichtung nach einem der Ansprüche 2 bis 4, dadurch gekennzeichnet, daß die Achsen der Nocken (2) und die Symmetrieachsen der Aussparungen (9) in der gleichen Ebene angeordnet sind.

6. Vorrichtung nach Anspruch 5, dadurch gekennzeichnet, daß die Achse des Zentrierstifts (12) in der gleichen Ebene wie die Achsen der Nocken (2) angeordnet sind.

7. Vorrichtung nach einem der vorhergehenden Ansprüche, dadurch gekennzeichnet, daß die Karosseriewand (5) eine mit Öffnungen (9) versehene Außenwand (4) und eine mit Öffnungen (14) versehene Innenwand (6) aufweist, die jeder Öffnung (9) gegenüberliegend angeordnet sind.

8. Verfahren zur Montage einer Schutzvorrichtung nach einem der vorhergehenden Ansprüche auf einem Karosserieelement (5), dadurch gekennzeichnet, daß es folgende Schritte umfaßt :

— das flexible Schutzelement (1) wird zunächst mit seinen Positionier- und Befestigungsmitteln versehen, wobei die Schrauben (7) einfach ohne Klemmwirkung eingreifen,

— ein Bediener setzt das Schutzelement auf die Wand, wobei die Positionier- und Befestigungsmittel in den breiten Bereich (11) der Aussparungen (9) eingeführt werden,

— der Bediener verschiebt das Schutzelement in Richtung seiner Endstellung,

— der Bediener begibt sich auf die andere Seite der Wand und zieht die Schrauben (7) fest ohne das Schutzelement zu halten.

## Claims

1. Protective device, in particular for a bodywork element (5), comprising a flexible protective element (1), positioning and fixing means carried by this element and openings (9) formed in the exterior panel (4) of the bodywork element, characterised in that :

— the flexible or protective element (1) comprises bosses (2) formed in relief on its face (3) bearing on the panel (4) ;

— fixing screws (7) provided with means (8) for support on the panel cooperate with threaded holes disposed in the axis of each of the bosses (2) ;

— the openings in the panel (4) consist of stud holes (9) disposed opposite each boss (2) and having axes of symmetry parallel to each other, the width of each stud hole changing between a value allowing passage of the bosses through the panel but not passage of the supporting means (8) of the screws, and a value sufficient to allow massage of these supporting means.

2. Device according to claim 1, characterised in that a centring pin (12) formed in relief on the bearing face of the protective element (1) cooperates with an opening (13) of corresponding section formed in the panel.

3. Device according to claim 1 or 2, characterised in that the means for supporting the screws on the panel consist of spacers (8).

4. Device according to claim 3, characterised in that the spacers (8) are in the form of a flat-bottomed dish.

5. Device according to any of claims 2 to 4, characterised in that the axes of the bosses (2) as well as the axes of symmetry of the stud holes (9) are situated in the same plane.

6. Device according to claim 5, characterised in that the axis of the centring pin (12) is in the same plane as the axes of the bosses (2).

7. Device according to any of the preceding claims, characterised in that the bodywork panel (5) comprises an exterior panel (4) provided with the openings (9) and an interior panel (6) provided with openings (14) disposed opposite each opening (9).

8. Method of assembly on a bodywork element (5) of a protective device according to any of the preceding claims, characterised in that it comprises the following steps :

— the flexible protector (1) is provided with its positioning and fixing means beforehand, the screws (7) being simply engaged without tightening ;

— the single operator applies the protector to the panel (4), the positioning and fixing means being introduced into the wide zone (11) of the stud holes (9) ;

— the operator slides the protector towards its end position ;

— the operator moves to the other side of the panel and tightens the screws (7) without holding the protector.

FIG. 1

FIG. 2

FIG. 3